# EUROPEAN PATENT APPLICATION

(11) **EP 3 321 946 A1**
(43) Date of publication of application: **16.05.2018**
(21) Application number: 16821076.3
(22) Date of filing: 12.04.2016
(51) Int. Cl.: H01G 11/48, H01M 10/38

(54) **PRODUCTION OF ELECTRODE-FREE ORGANIC BATTERY**

(30) Priority: 09.07.2015 JP 2015138095
(71) Applicant: National Institute of Advanced Industrial Science and Technology, Tokyo 100-8921 (JP)
(72) Inventor: MUKAIDA, Masakazu, Tsukuba-shi, Ibaraki 305-8565 (JP); WEI, Qingshuo, Tsukuba-shi, Ibaraki 305-8565 (JP); ISHIDA, Takeo, Tsukuba-shi, Ibaraki 305-8565 (JP)
(74) Representative: Hoffmann Eitle
(86) International application number: PCT/JP2016/061800
(87) International publication number: WO 2017/006605

(57) **Abstract**

The present invention is provided to solve problems such as increase in contact resistance, loss of flexibility, and increase in weight in the case of using a metal electrode or the like when producing a flexible secondary battery by using an organic conductive material. Organic conductive materials of the same type or different types whereof the charge carrier density can be controlled are used to prepare two organic conductive materials having different charge carrier densities, and these organic conductive materials are connected through electrolyte wherein protons may diffuse only, thereby producing a rechargeable and flexible secondary battery using no electrodes such as of metal or carbon constituting a positive electrode and a negative electrode and requiring no auxiliary agent or process such as material surface processing.

## Description

### Technical Field

The present invention relates to a secondary battery made of organic conductive materials.

### Background Art

It is reported that a use of organic materials for production of a lightweight battery is effective (Non-Patent Document 1).

There is a problem, however, that a contact resistance against a member such as an electrode is high, which hinders the practical application of the use of organic materials.

On the other hand, it is reported that a battery is produced by using a PEDOT-type material known as a conductive polymer material.

There has, however, been acquired only a chemical battery not able to be charged (Non-Patent Document 2) or a chemical battery whose operating mechanism is of negative ion conduction even if the battery is able to be charged and discharged (Non-Patent Document 3).

### Citation List

### Non-Patent Document

Non-Patent Document 1: P. Novak et al., Chem. Rev., 97, 1997, 207-281.
Non-Patent Document 2: Y. Xuan et al., Organic Electronics, 13, 2012, 632-637.
Non-Patent Document 3: D. Aradilla et al., Organic Electronics, 15, 2014, 40-46.

### Summary

### Technical Problem

It is therefore an object of the present invention to produce a secondary battery by using conductive organic materials without using a specific electrode and without the aid of a redox mechanism.

### Solution to Problem

Organic conductive materials (organic materials having conductivity) of the same type or different types whereof the charge carrier (proton) density can be controlled are used to prepare two organic conductive materials having different charge carrier densities, and these organic conductive materials are connected through electrolyte wherein protons may diffuse only, thereby producing a rechargeable secondary battery using no additional electrodes such as of metal or carbon constituting a positive electrode and a negative electrode and requiring no auxiliary agent or material surface processing or the like for obtaining electric power.

The present invention provides means described hereinbelow.
(1) A secondary battery including:
   an insulating substrate;
   a first thin film that is formed on the insulating substrate and made of a first organic conductive substance having a first charge carrier (proton) density;
   a second thin film that is formed space apart from the first thin film on the insulating substrate and made of a second organic conductive substance having a second charge carrier (proton) density; and
   electrolyte in which protons for connecting the first and second thin films to each other are able to diffuse,
   wherein:
      the first charge carrier density is smaller than the second charge carrier density;
      connection of a load between the first thin film and the second thin film causes the protons to diffuse from the second thin film to the first thin film in the electrolyte, by which the first charge carrier density increases while the second charge carrier density decreases and the secondary battery discharges; and
      respective connections of a positive electrode and a negative electrode of a charging power supply to the first thin film and the second thin film of the secondary battery causes protons to back-diffuse from the first thin film to the second thin film in the electrolyte, by which the first charge carrier density decreases while the second charge carrier density increases and thus the first charge carrier density becomes smaller than the second charge carrier density, thereby enabling the secondary battery to be charged repeatedly.
(2) The secondary battery described in (1), wherein the insulating substrate is a sheet having flexibility.
(3) The secondary battery described in any one of (1) and (2), wherein the respective organic conductive substances having the first and second charge carrier densities are gel or solid conductive PEDOT (polyethylenedioxythiophene):PSS (polystyrene sulfonate).
(4) The secondary battery described in (3), wherein the PEDOT:PSS substances are treated with ethylene glycol (EG), dimethyl sulfoxide (DMSO), or the like in order to be provided with conductivity and to increase the mobility of the charge carriers (protons), and the charge carrier density of one is maintained or decreased by additionally performing alkali treatment or the like so that the substance is formed as a first thin film, while the charge carrier density of the other is increased by additionally performing acid treatment using sulfuric acid or the like so that the substance is formed as a second thin film.
(5) Two series-connected secondary batteries in which two secondary batteries described in any one of (2) to (4) are connected in series via a conductive wire, wherein:
   connection of a load between the first thin film of one secondary battery and the second thin film of the other secondary battery causes the two series-connected secondary batteries discharge; and
   connection of the positive electrode and the negative electrode of a charging power supply to the first thin film and the second thin film of each secondary battery via conductive wires so that the two secondary batteries are connected in parallel to each other enables the two series-connected secondary batteries to be charged repeatedly.
(6) The secondary battery described in (5), wherein the secondary battery is produced on the sheet-like substrate having flexibility that is also a continuous sheet-like substrate.

### Advantageous Effects of Invention

A battery is able to be produced with a simple structure in which organic conductive materials are connected through electrolyte only, and the battery is metal-or-carbon electrode-free and is lightweight and flexible in addition to requiring no auxiliary agent or process such as surface processing, thereby enabling low manufacturing cost and leading to a practical use of a rechargeable battery.

A proton conduction mechanism is used as the charging and discharging operating mechanism and a proton as a conduction carrier is the minimum even when compared with a lithium ion that is the minimum ion at present.

Specifically, an increase in the number of conduction carriers (the number of charges) per unit area is expected, and the power generation capacity per unit volume, which is one of battery performances, increases in comparison with other organic batteries.

### Brief Description of Drawings

Fig. 1 is a schematic structural diagram of a secondary battery according to the present invention.
Fig. 2 is a diagram for describing a charging and discharging mechanism according to the present invention.
Fig. 3 is a characteristic diagram representing a result of a charging and discharging cycle test of the secondary battery illustrated in Fig. 1.
Fig. 4 is a schematic structural diagram of second batteries, in which two secondary batteries each having the minimum configuration of the present application are connected in series.

### Description of Embodiments

Organic conductive materials of the same type or different types whereof the charge carrier density can be controlled are used to prepare two organic conductive materials having different charge carrier densities, and these organic conductive materials are connected through electrolyte wherein protons may diffuse only, thereby producing a rechargeable secondary battery using no additional electrodes such as of metal or carbon constituting a positive electrode and a negative electrode and requiring no auxiliary agent or process such as material surface processing.

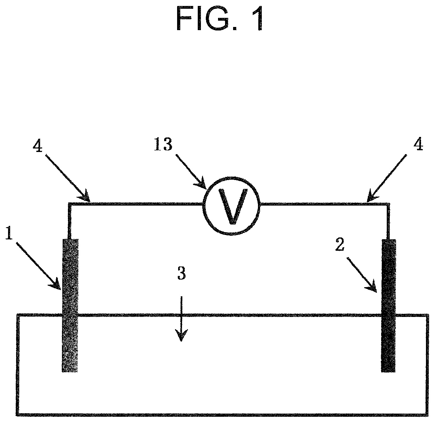

First, the battery schematic configuration of the present invention will be described by using Fig. 1.

In Fig. 1, the charge carrier density of an organic conductive material 1 is smaller than the charge carrier density of an organic conductive material 2.

In the case of discharging, if a load is connected between the organic conductive material 1 and the organic conductive material 2, the charge carriers (protons) diffusively move in electrolyte from the organic conductive material 2 having a greater charge carrier density toward the organic conductive material 1 having a smaller charge carrier density. At the same time, electrons flow out from the organic conductive material 2 of the secondary battery to a conductive wire 4 (on the right side) and electric current flows into the load, thereby consuming electric power.

Thereafter, when a difference in charge carrier density between the organic conductive material 1 and the organic conductive material 2 disappears, the electric current flowing through the conductive wire 4 stops.

In the case of charging, the power supply is connected between the organic conductive material 1 and the organic conductive material 2 for a predetermined period of time to apply voltage and, so that the charge carriers (protons) back-diffuse in the electrolyte, thereby generating a difference in charge carrier density between both materials and thus storing electric power.

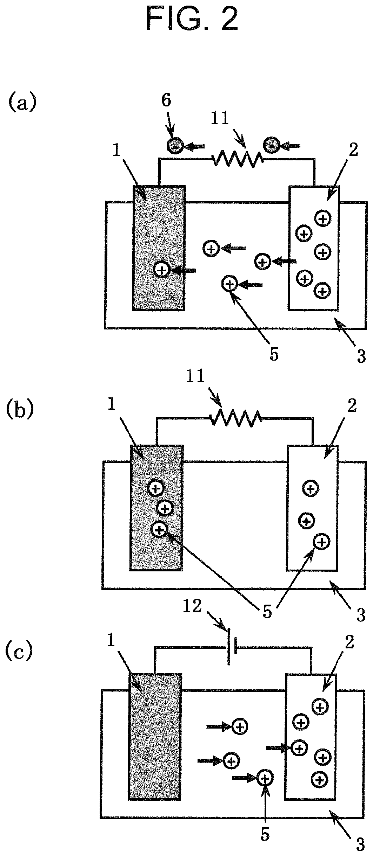

The aforementioned charging and discharging mechanism will be described in more detail by using Fig. 2.

During operation of the secondary battery (during discharging), protons 5 diffusively move in proton electrolyte 3 from the organic conductive material 2 having a greater charge carrier density toward the organic conductive material 1 having a smaller charge carrier density and the electrons 6 move in an external conductive wire since it cannot move in the proton electrolyte, by which electric power is obtained.

When the charge carrier density is equalized between the organic conductive material 1 and the organic conductive material 2 due to the further progression of the diffusive movement, the diffusive movement of the charge carriers 5 stops and thus the electric current stops flowing.

During the charging of the secondary battery, a charging power supply is connected between the organic conductive material 1 and the organic conductive material 2 to apply voltage, by which the charge carriers 5 back-diffuse and a difference in charge carrier density starts to appear between the organic conductive material 1 and the organic conductive material 2.

At the timing when a predetermined charge carrier density difference appears, the external power supply is disconnected and connected to the load, by which the secondary battery operates as a battery again.

For a concrete configuration of the secondary battery of the present invention, an organic conductive material in which only ethylene-glycol or DMSO treatment is performed on a conductive polymer material PEDOT:PSS or in which alkali treatment is further performed to decrease the charge carrier density is connected to an organic conductive material, in which acid treatment is performed on the conductive polymer material PEDOT:PSS to increase the charge carrier density, through aqueous or gel-like electrolyte, thereby obtaining a voltage having a several-volt level by one secondary battery.

Protons diffusively move in electrolyte from the organic conductive material having a greater charge carrier density to the organic conductive material having a smaller charge carrier density, thereby generating a potential difference.

The conductive polymer material is preferably film-like for the sake of lightweight and large area.

The electrolyte may be acid as long as it includes protons and does not damage the organic conductive material. For example, polystyrene sulfonic acid (PSSH) or the like is used as the electrolyte.

The amount of electrolyte may be the minimum necessary and may be a liquid directly or may be semisolid electrolyte included in gel or the like.

### Example 1

A secondary battery using a pair of PEDOT:PSS materials having different charge carrier densities has been produced by using polystyrene sulfonic acid (PSSH) (liquid or gel) for electrolyte.

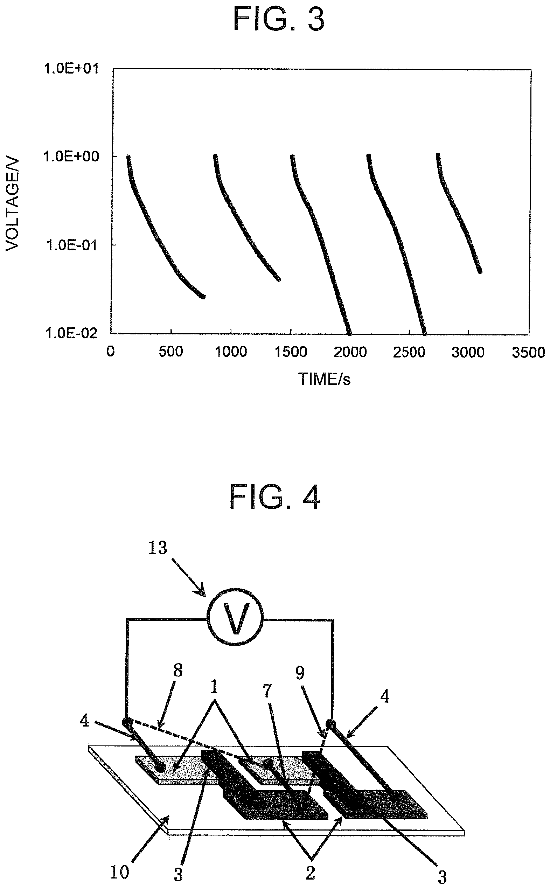

As illustrated in Fig. 3, a charging and discharging cycle test was performed by connecting the secondary battery to a power supply and charging it to 1V and then connecting a resistance of 1000 ohms to apply an electric current to the resistance (to discharge the secondary battery).

Fig. 3 illustrates a characteristic diagram representing a result of the charging and discharging cycle test.

As illustrated in Fig. 3, the secondary battery was charged for two to five minutes at a charging voltage of 3V and then discharged at the timing when the voltage reached 1V, and thereupon no voltage is obtained in five to ten minutes or so.

According to the characteristic diagram, it was confirmed that the secondary battery of the present invention is able to be charged and discharged and that the performance of the secondary battery is not degraded after the secondary battery is charged and discharged several times.

The secondary battery of the present invention does not use any metal electrode or the like and therefore is lightweight and flexible.

### Example 2

To increase the output voltage of the secondary battery, the secondary batteries of Example 1 may be connected in series.

Fig. 4 illustrates a schematic connection diagram of two series-connected secondary batteries in which the two second batteries illustrated in Fig. 1 are connected in series wherein PEDOT:PSS is used to increase the voltage.

The schematic connection diagram of two series-connected secondary batteries in Fig. 4 illustrates a connection state during battery operation (during discharging), and a conductive wire 4 of the secondary battery on the left side and a conductive wire 4 of the secondary battery on the right side are connected to a load.

In addition, an organic conductive material 2 of the secondary battery on the left side is connected to an organic conductive material 1 of the secondary battery on the right side via a conductive wire 7.

During discharging, charge carriers diffusively move from the organic conductive materials 2 of the secondary batteries on the right and left sides to the organic conductive materials 1 thereof and, at the same time, electrons flow out from the organic conductive material 2 of the left-side secondary battery to the conductive wire 7 and from the organic conductive material 2 of the right-side secondary battery to the conductive wire 4 (on the right side), by which an electric current flows to the load and electric power is consumed.

When the charge carrier densities are equal to each other between the organic conductive material 1 and the organic conductive material 2 of the right and left secondary batteries, the diffusive movement of the charge carriers in each secondary battery stops and thereby the electric current stops flowing.

When the secondary batteries are charged, preferably the conductive wire 7 is disconnected and each of the two secondary batteries is connected in parallel to the charging power supply by using a conductive wire 8 or a conductive wire 9 indicated by a dotted line for charging since the secondary batteries cannot be charged up to an applied voltage in the series connection directly.

In charging, the back-diffusion movement of the charge carriers in each secondary battery stops when the charge carrier density of the organic conductive material 1 has a predetermined difference from the charge carrier density of the organic conductive material 2 in the right and left secondary batteries, by which electric power is stored in each secondary battery.

Although an example of the series connection of two secondary batteries has been described hereinabove, a series connection of three or more secondary batteries may be configured in the same manner.

Regarding the secondary battery production of the present invention, secondary batteries can be continuously produced by a printing technique such as a method of dripping and drying liquid PEDOT:PSS on a flexible sheet or of pasting a PEDOT:PSS free-standing film, which has been produced by dripping and drying the liquid PEDOT:PSS, onto the flexible sheet, thereby enabling the production of low-cost, lightweight, and flexible charging-type batteries.

### Industrial Applicability

The present invention can be expected to be expanded to a battery for charging a power supply for an instrument (a pacemaker, a watch, or the like) attached to a human body or a battery for a mobile body in which a reduction in weight has a large advantageous effect.

### Reference Signs List

- 1: organic conductive material (smaller charge carrier density)
- 2: organic conductive material (greater charge carrier density)
- 3: electrolyte
- 4: conductive wire (in charging and discharging)
- 5: charge carrier (proton)
- 6: electron
- 7: conductive wire (for series connection)
- 8: conductive wire (in charging of left-side secondary battery)
- 9: conductive wire (in charging of right-side secondary battery)
- 10: base material
- 11: load
- 12: power supply
- 13: voltmeter

## Claims

1. A secondary battery comprising:
an insulating substrate;
a first thin film that is formed on the insulating substrate and made of a first organic conductive substance having a first charge carrier (proton) density;
a second thin film that is formed space apart from the first thin film on the insulating substrate and made of a second organic conductive substance having a second charge carrier (proton) density; and
electrolyte in which protons for connecting the first and second thin films to each other are able to diffuse,
wherein:
the first charge carrier density is smaller than the second charge carrier density;
connection of a load between the first thin film and the second thin film causes the protons to diffuse from the second thin film to the first thin film in the electrolyte, by which the first charge carrier density increases while the second charge carrier density decreases and the secondary battery discharges; and
respective connections of a positive electrode and a negative electrode of a charging power supply to the first thin film and the second thin film of the secondary battery causes protons to back-diffuse from the first thin film to the second thin film in the electrolyte, by which the first charge carrier density decreases while the second charge carrier density increases and thus the first charge carrier density becomes smaller than the second charge carrier density, thereby enabling the secondary battery to be charged repeatedly.

2. The secondary battery according to claim 1, wherein the insulating substrate is a sheet having flexibility.

3. The secondary battery according to any one of claims 1 and 2, wherein the respective organic conductive substances having the first and second charge carrier densities are gel or solid conductive PEDOT (polyethylenedioxythiophene):PSS (polystyrene sulfonate).

4. The secondary battery according to claim 3, wherein the PEDOT:PSS substances are treated with ethylene glycol (EG), dimethyl sulfoxide (DMSO), or the like in order to be provided with conductivity and to increase the mobility of the charge carriers (protons), and the charge carrier density of one is maintained or decreased by additionally performing alkali treatment or the like so that the substance is formed as a first thin film, while the charge carrier density of the other is increased by additionally performing acid treatment using sulfuric acid or the like so that the substance is formed as a second thin film.

5. Two series-connected secondary batteries in which two secondary batteries according to any one of claims 2 to 4 are connected in series via a conductive wire, wherein:
connection of a load between the first thin film of one secondary battery and the second thin film of the other secondary battery causes the two series-connected secondary batteries to discharge; and
connection of the positive electrode and the negative electrode of a charging power supply to the first thin film and the second thin film of each secondary battery via conductive wires so that the two secondary batteries are connected in parallel to each other enables the two series-connected secondary batteries to be charged repeatedly.

6. The secondary battery according to claim 5, wherein the secondary battery is produced on the sheet-like substrate having flexibility that is also a continuous sheet-like substrate.

## Amended claims

### Amended claims under Art. 19.1 PCT

1. (Amended) A secondary battery having no current collector, the secondary battery comprising only:
an insulating substrate;
a first thin film that is formed on the insulating substrate and made of a first organic conductive substance having a first charge carrier (proton) density;
a second thin film that is formed space apart from the first thin film on the insulating substrate and made of a second organic conductive substance having a second charge carrier (proton) density; and
electrolyte in which protons for connecting the first and second thin films to each other are able to diffuse,
wherein:
the first charge carrier density is smaller than the second charge carrier density;
connection of a load between the first thin film and the second thin film causes the protons to diffuse from the second thin film to the first thin film in the electrolyte, by which the first charge carrier density increases while the second charge carrier density decreases and the secondary battery discharges; and
respective connections of a positive electrode and a negative electrode of a charging power supply to the first thin film and the second thin film of the secondary battery causes protons to back-diffuse from the first thin film to the second thin film in the electrolyte, by which the first charge carrier density decreases while the second charge carrier density increases and thus the first charge carrier density becomes smaller than the second charge carrier density, thereby enabling the secondary battery to be charged repeatedly.

2. The secondary battery according to claim 1, wherein the insulating substrate is a sheet having flexibility.

3. The secondary battery according to any one of claims 1 and 2, wherein the respective organic conductive substances having the first and second charge carrier densities are gel or solid conductive PEDOT (polyethylenedioxythiophene):PSS (polystyrene sulfonate).

4. The secondary battery according to claim 3, wherein the PEDOT:PSS substances are treated with ethylene glycol (EG), dimethyl sulfoxide (DMSO), or the like in order to be provided with conductivity and to increase the mobility of the charge carriers (protons), and the charge carrier density of one is maintained or decreased by additionally performing alkali treatment or the like so that the substance is formed as a first thin film, while the charge carrier density of the other is increased by additionally performing acid treatment using sulfuric acid or the like so that the substance is formed as a second thin film.

5. Two series-connected secondary batteries in which two secondary batteries according to any one of claims 2 to 4 are connected in series via a conductive wire, wherein:
connection of a load between the first thin film of one secondary battery and the second thin film of the other secondary battery causes the two series-connected secondary batteries to discharge; and
connection of the positive electrode and the negative electrode of a charging power supply to the first thin film and the second thin film of each secondary battery via conductive wires so that the two secondary batteries are connected in parallel to each other enables the two series-connected secondary batteries to be charged repeatedly.

6. The secondary battery according to claim 5, wherein the secondary battery is produced on the sheet-like substrate having flexibility that is also a continuous sheet-like substrate.
